# FASCICULE DE BREVET EUROPEEN

(11) **EP 2 098 754 B1**
(45) Date de publication et mention de la délivrance du brevet: **05.10.2011**
(21) Numéro de dépôt: 09153142.6
(22) Date de dépôt: 18.02.2009
(51) Int. Cl.: F16H 3/12

(54) **Procédé de passage descendant avec couple moteur négatif, pour boîte de vitesses à crabots**
Verfahren zum Herunterschalten mit negativem Antriebsdrehmoment für Getriebe mit ausrückbaren Klauenkupplungen
Method for shifting down with negative engine torque, for a dog gearbox

(30) Priorité: 27.02.2008 FR 0851241
(43) Date de publication de la demande: 09.09.2009
(73) Titulaire: PEUGEOT CITROËN AUTOMOBILES S.A., 78140 Vélizy Villacoublay (FR)
(72) Inventeur: Gualino, David, 38330 Saint-Ismier (FR); Lelasseux, Xavier, 92150 Suresnes (FR); Mitchell, Clément, 92250 La Garenne Colombes (FR); Maurel, Stéphane, 92130 Issy les Moulineaux (FR)

(56) Documents cités:
- EP-A- 0 641 959
- DE-A1-102005 060 877
- DE-C1- 19 844 783
- US-A- 5 136 897

## Description

La présente invention concerne des stratégies de changement de vitesse pour une transmission du type boîte de vitesses manuelle d'un véhicule automobile, comportant des crabots pour l'engagement des rapports de vitesse.

Il existe des boîtes de vitesses automatiques comprenant des rapports de vitesse réalisés par des combinaisons de trains planétaires, les passages des rapports se faisant par l'actionnement de freins et d'embrayages, tout en transmettant aux roues motrices un couple moteur. Ces boîtes de vitesses ont pour inconvénient d'être lourdes et chères, de plus elles comportent un rendement médiocre.

Les boîtes de vitesses manuelles des véhicules automobiles comportent un arbre primaire lié au moteur du véhicule par un embrayage, et un ou deux arbres parallèles récepteur liés aux roues motrices du véhicule. L'arbre primaire peut être relié à chaque arbre récepteur par des couples de pignons formant un engrenage, transmettant le mouvement de l'un à l'autre suivant différents rapports de démultiplication correspondant respectivement à autant de rapports de vitesse.

Un des pignons de chaque engrenage est solidaire de l'arbre le supportant, l'autre pignon de l'engrenage est monté libre en rotation, il peut être rendu solidaire de son arbre par le coulissement axial d'un manchon de synchronisation. Ce coulissement réalise d'abord une synchronisation de la vitesse du pignon libre avec celle de l'arbre le supportant par un dispositif de synchronisation comportant des cônes de frottement, puis un crabotage assurant la solidarisation complète du pignon sur l'arbre.

Chaque manchon de synchronisation peut commander l'engagement d'un rapport disposé axialement d'un côté du manchon, ou de deux rapports disposés des deux côtés. De plus, un rapport de marche arrière réalise une inversion du sens de marche de l'arbre récepteur.

Ces boîtes de vitesses qui peuvent être automatisées sont simples et offrent un bon rendement, mais nécessitent un synchroniseur par rapport de vitesse ce qui impose un certain encombrement. De plus elles comportent une rupture de couple lors du passage des vitesses, qui peut être inconfortable.

Sachant que le document DE 198 44 783 C1 représente l'état de la technique le plus proche, une solution connue présentée notamment dans le document FR-A1-2674928, propose une boîte de vitesses manuelle automatisée comportant un nombre réduit de synchroniseurs. En effet, en utilisant un synchroniseur seulement sur le premier rapport de vitesse et des crabots sans synchroniseur sur les autres rapports, on peut utiliser ce synchroniseur pour lors d'un passage descendant vers une vitesse inférieure, l'engager temporairement afin d'augmenter la vitesse de l'arbre primaire et la synchroniser pour préparer le crabotage du rapport suivant.

Cependant, ces solutions ne permettent pas de piloter un certain couple dépendant de la demande du conducteur, sur les roues motrices du véhicule lors des changements de vitesse.

La présente invention a notamment pour but d'éviter ces inconvénients de la technique antérieure, et de proposer un procédé simple et efficace qui permette de réaliser un passage de vitesse descendant sur une boîte à crabots, tout en pilotant un couple moteur négatif ou couple de freinage transmis aux roues motrices du véhicule.

Elle propose à cet effet un procédé de passage descendant avec couple moteur négatif pour boîte de vitesses à crabots de véhicule automobile, comportant des actionneurs pour la commande d'un embrayage d'entrée lié à un arbre primaire, pour l'engagement des crabots et d'un synchroniseur disposé sur un rapport de vitesse inférieur à un rapport initial, caractérisé en ce qu'il réalise successivement les opérations suivantes :
- l'embrayage d'entrée est délesté pour descendre à une capacité en couple inférieure au couple moteur ;
- après un début de glissement de l'embrayage d'entrée, le synchroniseur est actionné pour transmettre un couple de roues négatif dépendant de la demande du conducteur, la capacité en couple de l'embrayage étant ajustée pour fournir le couple au synchroniseur, en parallèle l'actionneur du crabot du rapport initial exerce une force continue de dégagement de ce rapport ;
- le rapport initial étant dégagé, l'embrayage et le moteur gardent sensiblement le niveau de couple dépendant de la volonté du conducteur, pendant que le couple de synchroniseur est piloté de manière à rester supérieur au couple de l'embrayage, pour augmenter la vitesse de l'arbre primaire ;
- quand la vitesse de l'arbre primaire devient proche de celle du rapport final, ce rapport final est engagé ;
- le synchroniseur est progressivement désactivé, l'embrayage étant refermé ensuite ou simultanément.

Un avantage du procédé de passage selon l'invention est qu'en transmettant un couple de synchronisation supérieur au couple d'embrayage, on peut à la fois appliquer au moins une fraction du couple moteur négatif aux roues motrices par le synchroniseur, et en même temps réduire la vitesse de l'arbre primaire.

Le procédé selon l'invention peut en outre comporter une ou plusieurs des caractéristiques suivantes, qui peuvent être combinées entre elles.

Selon une caractéristique de l'invention, pour l'engagement du rapport final la vitesse de l'arbre primaire est maintenue légèrement au dessus de celle d'engagement de ce rapport final.

Avantageusement, après l'engagement du rapport final un couple moteur positif est établi pendant un court instant pour remonter la vitesse du moteur et recoller rapidement l'embrayage.

Avantageusement, un dégagement du rapport initial ou un engagement du rapport final est enregistré par une mesure de la position de l'actionneur des crabots de ces rapports.

L'invention comprend aussi une boîte de vitesses à crabots de véhicule automobile, comportant des actionneurs pour la commande d'un embrayage d'entrée lié à un arbre primaire, pour l'engagement des crabots et d'un synchroniseur disposé sur un rapport de vitesse inférieur à un rapport initial, caractérisée en ce qu'elle comporte des moyens pour réaliser le procédé de passage descendant avec un couple moteur négatif décrit ci-dessus, pour passer du rapport initial au rapport final inférieur.

En particulier, la boîte de vitesses à crabots peut comporter six rapports engagés par des crabots, ainsi que deux synchroniseurs disposés sur le troisième et le sixième rapport.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 présente de manière schématique, un exemple de boîte de vitesses utilisant le procédé suivant l'invention ;
- la figure 2 présente des diagrammes ayant pour abscisse le temps, comprenant successivement pour un passage de vitesse descendant avec un couple moteur négatif :
- des courbes de couple moteur, de couple transmis par l'embrayage d'entrée ou par le synchroniseur, et des courbes d'effort sur les actionneurs de passage ;
- la vitesse du moteur, la vitesse réelle de l'arbre primaire, et la vitesse théorique de cet arbre primaire avec le rapport final engagé ;
- les rapports demandés et les rapports réellement engagés ;
- des couples souhaités ou réels, en sortie de boîte de vitesses.

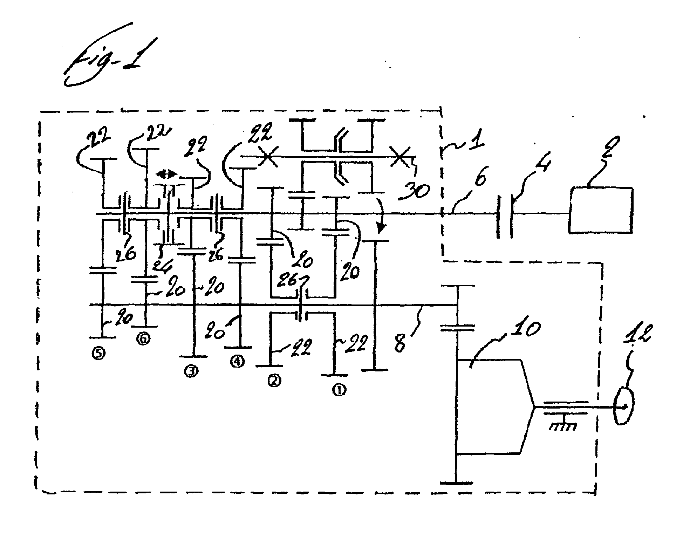

La figure 1 présente une boîte de vitesses 1 à arbres parallèles, comprenant un premier arbre primaire 6 lié au moteur du véhicule 2 par un embrayage 4, et un deuxième arbre récepteur 8 qui entraîne les roues motrices du véhicule 12 par un différentiel 10.

L'arbre primaire 6 supporte une série de six pignons engrenant chacun avec un autre pignon porté par l'arbre récepteur 8, pour former six rapports de vitesses. Pour chacun de ces engrenages, un des pignons 20 est fixé sur l'arbre le supportant, tandis que l'autre 22 est libre, pouvant être lié à l'arbre le supportant par des manchons de crabotage 26 ne comportant pas de dispositif de synchronisation. Chaque manchon de crabotage 26 coulisse axialement sous l'effet d'un actionneur, pour engager d'un côté ou de l'autre un rapport de vitesse.

Un manchon de synchronisation 24 est placé sur l'arbre primaire 6 entre les pignons libres 22 du troisième et du sixième rapport. Les synchroniseurs placés axialement de part et d'autre de ce manchon 24, peuvent transmettre un couple élevé égal au moins à une part importante du couple moteur. Ces synchroniseurs comportent par exemple plusieurs cônes de frottement, mis en oeuvre par un actionneur délivrant une force axiale élevée. Les synchroniseurs peuvent aussi dissiper une énergie importante.

Les crabots des pignons libres 22 du troisième et du sixième rapport, se trouvent axialement par rapport à ces pignons, de l'autre côté du manchon de synchronisation 24.

Un arbre parallèle 30 supporte des pignons pouvant être liés ensemble, pour réaliser une inversion du sens de marche utilisée par le rapport de marche arrière.

Les manchons des crabots 26 et des synchroniseurs 24, ainsi que l'embrayage 4 sont actionnés par des actionneurs non représentés, pilotés eux-mêmes par un calculateur de gestion de la boîte de vitesses, pour réaliser des passages de vitesses suivant la demande du conducteur et les conditions de fonctionnement du véhicule, et en fonction de lois de passage mises en mémoire dans ce calculateur.

Le fonctionnement de la boîte de vitesses 1 est le suivant.

Les passages de vitesses se font avec une ouverture partielle de l'embrayage 4, pour désolidariser en partie l'arbre primaire 6 du moteur 2 comportant une forte inertie provenant de son volant moteur, tout en réduisant éventuellement le couple délivré par les combustions de ce moteur. Puis le couple transmis par l'embrayage 4 est transféré momentanément par un des synchroniseurs du manchon 24, au rapport de vitesse qui lui est lié pour être transmis aux roues motrices 12.

Pour un passage de vitesse montant vers un rapport final avec un couple positif, on peut utiliser le synchroniseur d'un rapport égal ou supérieur à ce rapport final, pour transmettre momentanément le couple moteur et diminuer la vitesse de l'arbre primaire 6.

Pour un passage de vitesse montant avec un couple négatif, on peut utiliser si il en existe un, un synchroniseur d'un rapport inférieur au rapport initial pour diminuer la vitesse de l'arbre primaire 6.

Pour un passage de vitesse descendant avec un couple positif, on peut utiliser si il en existe un, un synchroniseur d'un rapport strictement supérieur au rapport initial pour transmettre momentanément le couple moteur et augmenter la vitesse de l'arbre primaire 6.

Pour un passage de vitesse descendant vers un rapport final avec un couple négatif, on peut utiliser aussi si il en existe un, un synchroniseur d'un rapport égal ou inférieur à ce rapport final, pour augmenter la vitesse de l'arbre primaire 6.

La vitesse de l'arbre primaire 6 ayant ensuite atteint une valeur proche de celle correspondant à l'engagement du rapport final, ce rapport est craboté puis l'embrayage est refermé pour passer la totalité du couple moteur.

Pendant le changement de rapport de vitesse, on pilote en parallèle le couple moteur, l'embrayage et le synchroniseur pour appliquer au final sur les roues motrices 12, un certain couple dépendant de la demande du conducteur, tout en tenant compte de l'énergie dissipé par les composants en cours de glissement.

On réalise ainsi une transmission suivant une architecture du type boîte de vitesses manuelle, comportant un bon rendement et réalisable avec un coût modéré, qui assure un confort lors des changements de vitesses en transmettant au moins une partie du couple moteur aux roues motrices.

En variante, la boîte de vitesses 1 peut comporter deux arbres récepteurs disposés en parallèle.

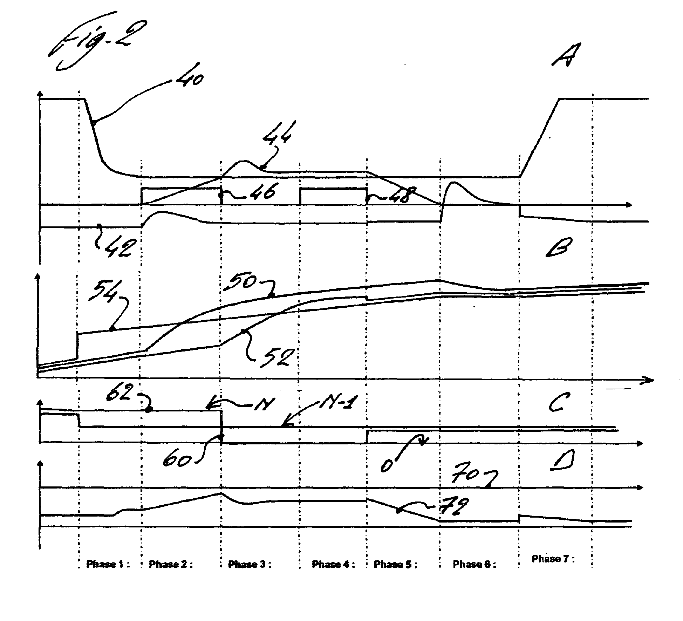

La figure 2 présente de haut en bas quatre diagrammes A, B, C et D, comportant une même abscisse représentant le temps, pour un passage de vitesse descendant avec un couple moteur négatif, qui se déroule en sept phases successives notées phase 1 à phase 7.

Le premier diagramme A comporte une courbe de capacité en couple 40 de l'embrayage d'entrée 4, modulé par un mouvement de son actionneur de commande, une courbe de couple moteur 42 délivré suivant une régulation effectuée par le calculateur de contrôle de ce moteur, et une courbe de capacité en couple 44 du synchroniseur, modulé par un mouvement de l'actionneur de son manchon de synchronisation 24.

On notera que le couple moteur est ici négatif, le moteur appliquant un freinage sur les roues motrices, et que le couple de l'embrayage 40 ainsi que celui du synchroniseur 44 représentent des capacité en couple définies par convention comme toujours positive, alors que dans ce cas ils transmettent effectivement un couple moteur négatif.

Ce diagramme A comporte aussi une courbe d'effort d'extraction 46 pour le dégagement du crabot du rapport initial N, et une courbe d'effort d'engagement 48 pour l'engagement du crabot du rapport final inférieur N-1.

Le deuxième diagramme B comporte une courbe de vitesse moteur 50, une courbe de vitesse réelle de l'arbre primaire 52, et une courbe de vitesse théorique de l'arbre primaire 54 dans le cas où le rapport de vitesse N-1 serait engagé.

Le troisième diagramme C comporte une courbe 60 présentant le choix attendu du rapport de vitesse, correspondant à une décision du calculateur de commande de la boîte de vitesses tenant compte de la demande du conducteur ainsi que de différents paramètres de fonctionnement du véhicule, et une courbe 62 présentant le rapport effectivement craboté. Ces courbes sont situées sur trois niveaux, en partant du bas 0 pour aucun rapport engagé, N-1 pour le rapport final engagé et N pour le rapport initial engagé.

Le quatrième diagramme D comporte une courbe présentant le couple aux roues motrices 70 suivant la demande du conducteur, et le couple réel appliqué aux roues motrices 72.

Le passage de rapport descendant avec couple moteur négatif décrit ci-dessous, utilise un synchroniseur d'un rapport strictement inférieur au rapport de départ N.

Ce passage peut être avec l'exemple de boîte de vitesses décrit figure 1, une descente d'un rapport de vitesse à partir du quatrième, du cinquième ou du sixième rapport, avec utilisation du synchroniseur du troisième rapport.

Avant la phase 1, la capacité en couple de l'embrayage 40 est supérieure au couple moteur négatif délivré 42, l'embrayage ne glisse pas. Le rapport initial N est engagé.

En début de phase 1, le calculateur décide le passage du rapport inférieur, le rapport demandé 60 passe à N-1. Simultanément, la capacité en couple de l'embrayage 40 baisse progressivement et passe en dessous du couple moteur négatif 42 délivré, l'embrayage commence à patiner.

On détecte ce début de patinage, par exemple en comparant la vitesse moteur 2 avec celle de l'arbre primaire 6 mesurée par un capteur de vitesse. Le moteur agissant comme un frein, le patinage provoque une baisse de la vitesse du moteur 50 par rapport à celle de l'arbre primaire 52.

Ce glissement de l'embrayage détecté, on applique en phase 2 un effort continu d'extraction 46 pour le dégagement du crabot du rapport initial N. Parallèlement le synchroniseur du rapport inférieur est engagé. Le couple de ce synchroniseur 44 monte progressivement pour rejoindre sensiblement le couple de l'embrayage 40, ce qui transfert du couple négatif vers les roues motrices par cette voie, et déleste d'autant le couple transmis sur le rapport N.

Pour obtenir une montée rapide du couple de synchronisation 44, on peut ajuster au préalable, pendant la phase 1, la position de son manchon au point de léchage des cônes de synchronisation pour les préparer avec un faible mouvement de ce manchon, à transmettre rapidement un couple.

Quand le couple transmis sur le rapport N est suffisamment faible, la fonction anti-lâché de son crabot comportant une pente sur les dents de crabotage pour le maintenir engagé sous l'effet d'un couple transmis, n'est plus efficace. Ce crabot se dégage en fin de phase 2, la courbe 62 présentant le rapport effectivement engagé descend à 0.

L'effort continu d'extraction 46 appliqué sur le crabot du rapport N, est à ajuster pour que cette extraction ne se fasse pas trop tôt. De cette manière le couple résiduel transmis sur le rapport initial N est faible, et lors du décrabotage de ce rapport on n'a quasiment pas de variation brutale de couple aux roues motrices qui entraînerait une oscillation de couple.

Pendant les phases 3 et 4 on pilote un effort sur le manchon de synchroniseur 24 pour obtenir un couple de synchroniseur 44 qui est proche du couple moteur négatif initial 42, pour transmettre aux roues motrices un couple sensiblement constant.

En particulier, on pilote le couple du synchroniseur 44 pour qu'il reste supérieur ou égal au couple transmis par l'embrayage 40. De cette manière, cette différence de couple du synchroniseur 44 s'appliquant sur un rapport inférieur, permet une accélération de la vitesse du moteur 50 ainsi que de celle de l'arbre primaire 52.

En fin de phase 3, la vitesse réelle de l'arbre primaire 52 a un peu dépassée la vitesse théorique 54 de l'arbre primaire dans le cas du rapport de vitesse N-1 engagé, et reste légèrement au dessus de cette valeur. Le rapport final N-1 peut être engagé.

En phase 4, on applique un effort continu d'engagement 48 sur le crabot du rapport final N-1, qui finit par s'engager quand les dents du crabots s'alignent. Pendant ce temps d'engagement, on maintient une vitesse réelle de l'arbre primaire 52 légèrement supérieur à sa vitesse théorique 54 sur le rapport final, pour permettre aux dents de s'aligner.

Cette phase 4 gère aussi les échecs de crabotage, en reprenant par exemple le cycle de cette phase.

La courbe 62 présentant le rapport effectivement craboté remonte alors à N-1. Le contrôle de l'engagement de ce rapport final peut se faire par exemple, par une mesure de la position de l'actionneur de son manchon.

En phase 5 après l'engagement du rapport final N-1, on baisse progressivement le couple de synchroniseur 44 en délestant la charge axiale appliquée dessus jusqu'à ce qu'elle tombe à une valeur nulle, le couple moteur étant alors parallèlement repris par les pignons du rapport final N-1.

Le dégagement complet du couple de synchroniseur 44 peut être contrôlé par exemple par une mesure de la position de l'actionneur du manchon de synchronisation.

La durée des phases 2 à 5 pendant lesquelles le synchroniseur travaille, doit être réduite au maximum tout en évitant des écarts de couple brutaux qui engendreraient une oscillation de couple, pour réduire le temps de glissement du synchroniseur et son énergie dissipée.

En phase 6 le calculateur du moteur remet un léger couple moteur positif 42, ce qui a pour effet de remonter la vitesse du moteur 50 au niveau de celle de l'arbre primaire 52, est de recoller rapidement l'embrayage. En fin de phase 6, l'embrayage ne glisse plus, la vitesse moteur 50 a rejoint celle de l'arbre primaire 52.

Pendant les phases 2 à 6, le glissement de l'embrayage est constamment surveillé par la mesure des différences de vitesse entre le moteur et l'arbre primaire 6, pour réduire aussi l'énergie dissipée.

En phase 7 l'embrayage est collé, il peut transmettre la totalité du couple moteur négatif 42. Parallèlement, la capacité de l'embrayage 40 remonte aussi pour revenir à son niveau initial maximum.

En variante cette phase 7 de remontée de la capacité de l'embrayage 40, peut commencer plus tôt en parallèle avec la phase 6 de fin de glissement de l'embrayage, pour réduire l'énergie dissipée.

Le procédé de passage descendant suivant l'invention peut être utilisé avec la boîte de vitesses présentée figure 1, pour descendre un rapport à partir du quatrième, du cinquième ou du sixième rapport, en utilisant le synchroniseur du troisième rapport de vitesse.

En variante on peut utiliser le procédé suivant l'invention pour descendre plusieurs rapports de vitesse à la fois lors d'un unique passage descendant, pour passer par exemple directement du sixième au quatrième rapport.

On peut utiliser le procédé de passage descendant avec un couple moteur négatif suivant l'invention, pour d'autres types de boîtes de vitesses, comprenant par exemple un seul ou trois synchroniseurs, ou un nombre de rapports de vitesse différent.

On obtient ainsi de manière simple et efficace une boîte de vitesses comportant un bon rendement, et permettant de transmettre au moins une partie du couple moteur suivant la demande du conducteur, pendant ce type de changement de rapport de vitesse.

## Revendications

1. Procédé de passage descendant avec couple moteur négatif pour boîte de vitesses à crabots (1) de véhicule automobile, comportant des actionneurs pour la commande d'un embrayage d'entrée (4) lié à un arbre primaire (6), pour l'engagement des crabots (26) et d'un synchroniseur (24) disposé sur un rapport de vitesse inférieur à un rapport initial (N), **caractérisé en ce qu'**il réalise successivement les opérations suivantes :
- l'embrayage d'entrée (4) est délesté pour descendre à une capacité en couple (40) inférieure au couple moteur (42) ;
- après un début de glissement de l'embrayage d'entrée, le synchroniseur (24) est actionné pour transmettre un couple de roues (72) négatif dépendant de la demande du conducteur, la capacité en couple (40) de l'embrayage étant ajustée pour fournir le couple au synchroniseur, en parallèle l'actionneur du crabot du rapport initial (N) exerce une force continue (46) de dégagement de ce rapport ;
- le rapport initial (N) étant dégagé, l'embrayage et le couple moteur (42) gardent sensiblement le niveau de couple dépendant de la volonté du conducteur, pendant que le couple de synchroniseur (44) est piloté de manière à rester supérieur au couple de l'embrayage (40) pour augmenter la vitesse de l'arbre primaire (52) ;
- quand la vitesse de l'arbre primaire (52) devient proche de celle du rapport final (54), ce rapport final (N-1) est engagé ;
- le synchroniseur (24) est progressivement désactivé, l'embrayage (4) étant refermé ensuite ou simultanément.

2. Procédé de passage suivant la revendication 1, **caractérisé en ce que** pour l'engagement du rapport final (N-1), la vitesse de l'arbre primaire (52) est maintenue légèrement au dessus de celle (54) d'engagement de ce rapport final.

3. Procédé de passage suivant la revendication 1 ou 2, **caractérisé en ce qu'**après l'engagement du rapport final (N-1), un couple moteur (42) positif est établi pendant un court instant pour remonter la vitesse du moteur (50) et recoller rapidement l'embrayage (4).

## Claims

1. A down-shifting method with a negative engine torque for a dog gearbox (1) of a motor vehicle comprising actuators for controlling an input clutch (4) connected to a main shaft (6), and for engaging dogs (26) and a synchroniser (24) arranged over a speed ratio less than an initial ratio (N), **characterised in that** it carries out the following operations in succession:
- the input clutch (4) is disengaged to drop to a torque capacity (40) lower than the engine torque (42);
- once the input clutch has started to slip, the synchroniser (24) is actuated to transmit a negative wheel torque (72) depending on the driver's request, the torque capacity (40) of the clutch being adjusted to supply the torque to the synchroniser, and the actuator of the dog of the initial ratio (N) exerts, in parallel, a continuous force (46) for disengaging this ratio;
- the initial ratio (N) having been disengaged, the clutch and the engine torque (42) substantially maintain the level of torque depending on the driver's wishes, whilst the synchroniser torque (44) is driven in such a way that it remains greater than the clutch torque (40) to increase the speed of the main shaft (52);
- the final ratio (N-1) is engaged when the speed of the main shaft (52) approaches that of the final ratio (54);
- the synchroniser (24) is progressively deactivated, the clutch (4) being closed back either subsequently or simultaneously.

2. The shifting method according to claim 1, **characterised in that**, for engagement of the final ratio (N-1), the speed of the main shaft (52) is kept slightly above that (54) of engagement of said final ratio.

3. The shifting method according to claim 1 or claim 2, **characterised in that** after the engagement of the final ratio (N-1) a positive engine torque (42) is established over a short time in order to increase the speed of the engine (50) and quickly close the clutch (4) back.

## Patentansprüche

1. Verfahren zum Herunterschalten mit negativem Motormoment für ein Klauengetriebe (1) eines Kraftfahrzeuges, umfassend Betätigungsglieder für die Betätigung einer Eingangskupplung (4), die mit einer Hauptwelle (6) verbunden ist, für das Eingreifen der Klauen (26) und einer Gleichlaufvorrichtung (24), die auf einer Gangstufe angeordnet ist, die niedriger als ein ursprünglicher Gang (N) ist, **dadurch gekennzeichnet, dass** es nacheinander folgende Vorgänge ausführt:
- die Eingangskupplung (4) wird entlastet, um auf eine Drehmomentkapazität (40) abzusinken, die geringer als das Motormoment (42) ist;
- nach einem anfänglichen Schlupf der Eingangskupplung wird die Gleichlaufvorrichtung (24) betätigt, um ein negatives Radmoment (72) zu übertragen, das von der Anforderung des Fahrers abhängig ist, wobei die Drehmomentkapazität (40) der Kupplung angepasst wird, um das Drehmoment an die Gleichlaufvorrichtung zu liefern, gleichzeitig übt das Betätigungsglied der Klaue des ursprünglichen Ganges (N) eine kontinuierliche Kraft (46) zum Lösen dieses Ganges aus;
- wenn der ursprüngliche Gang (N) gelöst ist, behalten die Kupplung und das Motormoment (42) im Wesentlichen das Niveau des Drehmoments, das vom Willen des Fahrers abhängig ist, während das Moment der Gleichlaufvorrichtung (44) so gesteuert wird, dass es größer als das Kupplungsmoment (40) bleibt, um die Drehzahl der Hauptwelle (52) zu erhöhen;
- wenn sich die Drehzahl der Hauptwelle (52) dem Endgang (54) annähert, wird dieser Endgang (N-1) eingelegt;
- die Gleichlaufvorrichtung (24) wird schrittweise deaktiviert, wobei die Kupplung (4) danach oder gleichzeitig wieder eingekuppelt wird.

2. Verfahren zum Schalten nach Anspruch 1, **dadurch gekennzeichnet, dass** für das Einlegen des Endganges (N-1) die Drehzahl der Hauptwelle (52) geringfügig über jener (54) für das Einlegen dieses Endganges gehalten wird.

3. Verfahren zum Schalten nach Anspruch 1 oder 2, **dadurch gekennzeichnet, dass** nach dem Einlegen des Endganges (N-1) während eines kurzen Augenblicks ein positives Motormoment (42) herbeigeführt wird, um die Drehzahl des Motors (50) wieder zu erhöhen und die Kupplung (4) schnell wieder einzukuppeln.
